# EUROPEAN PATENT APPLICATION

(11) **EP 1 903 795 A2**
(43) Date of publication of application: **26.03.2008**
(21) Application number: 07017465.1
(22) Date of filing: 06.09.2007
(51) Int. Cl.: H04N 5/63

(54) **Power control apparatus, system and method**

(30) Priority: 22.09.2006 JP 2006257733
(71) Applicant: Kabushiki Kaisha Toshiba, Minato-ku, Tokyo 105-8001 (JP)
(72) Inventor: Yamashita, Keita c/o Intellectual Property Division, Tokyo 105-8001 (JP)
(74) Representative: HOFFMANN EITLE

(57) **Abstract**

According to one embodiment, a power control apparatus is applied to a video display apparatus (11) displaying video. The power control apparatus includes an apparatus switching unit (61) switching any one of a plurality of external apparatuses (35, 36) connected to the video display apparatus (11) to be for video display, and an activation control unit (61) performing activation control of activating a power source of the external apparatus (35) to make the external apparatus (35) be in a viewing state when the external apparatus (35) switched by the apparatus switching unit (61) is in a standby state.

## Description

### BACKGROUND

### 1. Field

One embodiment of the invention relates to a power control apparatus applied to a video display apparatus having a video display function such as a television, a projector and a monitor, a power control system including the power control apparatus, and a power control method.

### 2. Description of the Related Art

There is conventionally known a video display apparatus such as a television, a projector and a monitor which displays video by using a video signal made by receiving and reproducing a broadcast wave or a video signal inputted from the outside.

There is also known a video reproducing apparatus which reads digital data recorded in a recording medium, such as a DVD (Digital Versatile Disk) and an HDD (Hard Disk Drive), reproduces a video signal, and output the reproduced video signal to a video display apparatus.

Conventionally, in the video display apparatus and the video reproducing apparatus, a function to control turning on/off of a power source in one apparatus in the other apparatus may be provided. For example, Japanese Patent Application Publication (KOKAI) No. 8-298636 (Patent Document 1) discloses turning off of a power source of an unnecessary tuner of a tuner for a video tape recorder and a turner for a television in the television with the built-in video tape recorder.

Further, recently, in the video display apparatus and the video reproducing apparatus, respectively, various models are in practical use, and there are increasing occasions of constructing a home network in which the video display apparatus and the video reproducing apparatus are mutually connected in a home. For example, Japanese Patent Application Publican (KOKAI) No. 2003-18668 (Patent Document 2) discloses controlling of turning on/off a power source in one apparatus in the other apparatus in a home network in which a video display apparatus and a video reproducing apparatus are connected in accordance with an HAVI (Home Audio/video Interoperability) standard.

### SUMMARY OF THE INVENTION

According to the above-described prior art, for a video display apparatus and a video reproducing apparatus, it is possible to control turning on/off of a power source in one apparatus in the other apparatus.
However, in a case that a plurality of video reproducing apparatuses are connected to a video display apparatus, when apparatus switching of switching the video reproducing apparatus used for video display is performed, the inconvenience that a user is required to turn on/off a power source of each video reproducing apparatus by hand has not been eliminated even if the above-described prior art is applied.
The invention is made to solve the above-described problem and is objected to provide a power control apparatus having a function to make turning on/off of a power source be performed appropriately in correspondence with apparatus switching, a power control system having the power control apparatus, and a power control method.

In order to solve the above-described problem, the invention is a power control apparatus applied to a video display apparatus displaying video, and includes: an apparatus switching unit switching any one of a plurality of external apparatuses connected to the video display apparatus to be for video display; and an activation control unit performing activation control of activating a power source of the external apparatus to make the external apparatus be in a viewing state when the external apparatus switched by the apparatus switching unit is in a standby state.
The invention also provides a power control system including a video display apparatus displaying video and a plurality of external apparatuses connected to the video display apparatus and controlling power sources of the plurality of external apparatuses by the video display apparatus, wherein the video display apparatus includes: an apparatus switching unit switching any one of the plurality of external apparatuses to be for video display; and an activation control unit performing activation control of activating the power source of the external apparatus to make the external apparatus be in a viewing state when the external apparatus switched by the apparatus switching unit is in a standby state.

Further, the invention provides a power control method applied to a video display apparatus displaying video, the power control method including: switching any one of a plurality of external apparatuses connected to a video display apparatus to be for video display; and performing activation control of activating a power source of the external apparatus to make the external apparatus be in a viewing state when the switched external apparatus is in a standby state.
As stated in detail above, according to the invention, a power control apparatus having a function to make turning on/off of a power source be performed appropriately in correspondence with apparatus switching, a power control system having the power control apparatus, and a power control method can be obtained.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is a block diagram showing a configuration of a power control system according to an embodiment of the invention;

FIG. 2 is a block diagram showing a configuration of a network system;

FIG. 3 is a block diagram showing a main configuration of the inside of a digital broadcast receiving apparatus;

FIG. 4 is a sequence chart showing an operation sequence of each apparatus at a time that the digital broadcast receiving apparatus controls turning on/off of power sources of an STB and an HD DVD player;

FIG. 5 is a sequence chart showing another operation sequence as well;

FIG. 6 is a sequence chart showing still another operation sequence as well;

FIG. 7 is a block diagram showing a configuration of another power control system;

FIG. 8 is a flowchart showing an example of a procedure of an output operation of a "Power Off" command at a time that a power source of the digital broadcast receiving apparatus is turned off; and

FIG. 9 is a flowchart showing an example of an operation procedure of turning on a power control flag in accordance with a setting of power control.

### DETAILED DESCRIPTION

Various embodiments according to the invention will be described hereinafter with reference to the accompanying drawings.

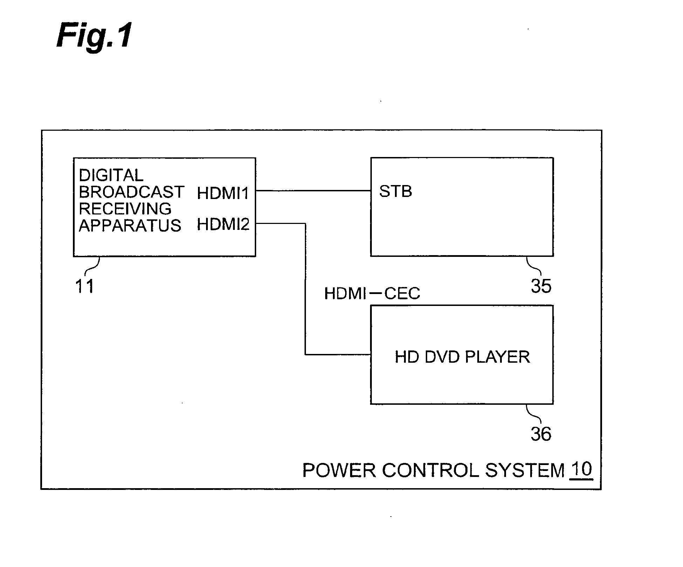

FIG. 1 is a block diagram showing a configuration of a power control system 10 according to an embodiment of the invention. The power control system 10 includes a later-described digital broadcast receiving apparatus 11 as a video display apparatus, an STB (Set-Top Box) 35 and a later-described HD DVD player 36 as external apparatuses connected to the digital broadcast receiving apparatus 11.

The digital broadcast receiving apparatus 11 has a function as a power control apparatus and controls turning on/off of power sources of the STB 35 and the HD DVD player 36.

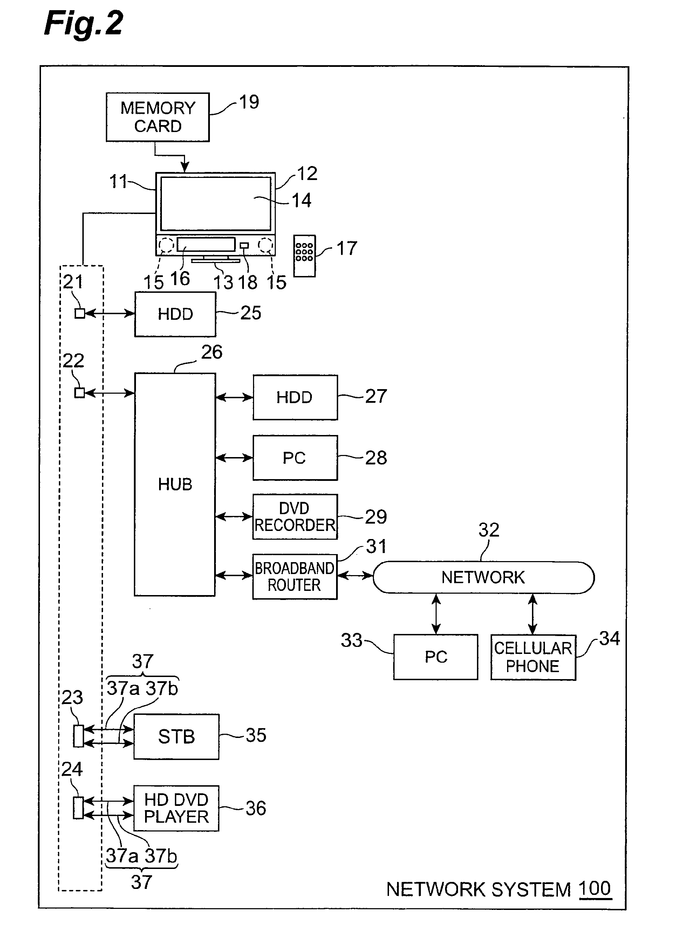

Next, FIG. 2 is a block diagram showing a configuration of the digital broadcast receiving apparatus 11 and a network system 100 configured with the digital broadcast receiving apparatus 11 as a center.

The digital broadcast receiving apparatus 11 includes a cabinet 12 and a support table 13 supporting the cabinet 12 with the cabinet 12 raised, as shown in FIG. 2. The cabinet 12 includes a flat panel type liquid crystal display device 14 having a liquid crystal display panel, a speaker 15 as a sound output device outputting sound, and an operation part 16, and also includes a light receiving part 18 receiving operation information transmitted from a remote controller 17.

The digital broadcast receiving apparatus 11 is a video display apparatus displaying video by the liquid crystal display device 14 as a display device displaying video, and displays video by using a video signal inputted from the STB 35 or the HD DVD player 36.

A memory card 19 such as an SD (Secure Digital) memory card, an MMC (Multi Media Card) and a memory stick, for example, is attachable and detachable to and from the digital broadcast receiving apparatus 11, and recording and reproducing of a program, a photograph and the like are performed by using the memory card 19.

The digital broadcast receiving apparatus 11 includes a first LAN (Local Area Network) terminal 21, a second LAN (Local Area Network) terminal 22, a first HDMI (High-Definition Multimedia Interface) terminal 23 ("HDMI 1 in FIG. 1), and a second HDMI (High-Definition Multimedia Interface) terminal 24 ("HDMI 2" in FIG. 1).

These terminals are selected in correspondence with apparatus switching, and the external apparatus connected to the selected terminal is set to be the external apparatus for video display. For example, when the first HDMI terminal 23 is selected by the apparatus switching, the STB 35 is set to be the external apparatus for video display.

The first LAN terminal 21 is used as a LAN-compatible HDD exclusive port. This first LAN terminal 21 is used for recording and reproducing information by Ethernet (registered trademark) to and from a LAN compatible HDD (Hard Disk Drive) 25 connected to the first LAN terminal 21 as a NAS (Network Attached Storage).

As stated above, in the network system 100, by providing the first LAN terminal 21 as the LAN compatible HDD exclusive port, information recording of a program by high definition quality can be stably performed for the HDD 25 without being influenced by the other network environment, a network usage state and the like.

The second LAN terminal 22 is used as a general LAN compatible port using Ethernet. Equipment such as a LAN compatible HDD 27, a PC (Personal Computer) 28 and a DVD (Digital Versatile Disk) recorder 29 with a built-in HDD are connected to this second LAN terminal 22 through a hub 26, for example, and the second LAN terminal 22 is used for performing information transmission with such equipment.

Further, a PC 33 and a cellular phone 34 are connected to the second LAN terminal 22 through a broadband router 31 connected to the hub 26, and a network 32 such as the Internet, and the second LAN terminal 22 is also used for performing information transmission with the PC 33 and the cellular phone 34.

The first and second HDMI terminals 23, 24 are terminals for inputting high definition digital video signal and digital sound signal from the external apparatus in accordance with an HDMI standard. The STB 35 is connected as the external apparatus to the first HDMI terminal 23, while the HD DVD player 36 is connected to the second HDMI terminal 24.

The digital video signals and the digital sound signals are inputted and outputted between the first and second HDMI terminals 23, 24 and the external apparatuses through data lines 37a of HDMI cables 37. Further, to and from the first and second HDMI terminals 23, 24, there are inputted and outputted data (later-described respective commands such as a "Power On" command and a "Power Off" command) for realizing various control functions (for example, power source turning on/off control of the external apparatus by the digital broadcast receiving apparatus 11) in the digital broadcast receiving apparatus 11 and the external apparatus, through CEC lines 37b.

The STB 35 is connected to an unshown cable TV network to receive a program, or connected to an unshown telephone line to perform Internet connection. The STB 35 outputs the video signal to the digital broadcast receiving apparatus 11 through the HDMI cable 37.

The HD DVD player 36 performs reproduction of video in accordance with an HD DVD (High Definition DVD) standard, and outputs the reproduced video signal to the digital broadcast receiving apparatus 11 through the HDMI cable 37.

The digital broadcast receiving apparatus 11 can input therein video signals, sound signals and control signals in digital form by the first and second HDMI terminals 23, 24.

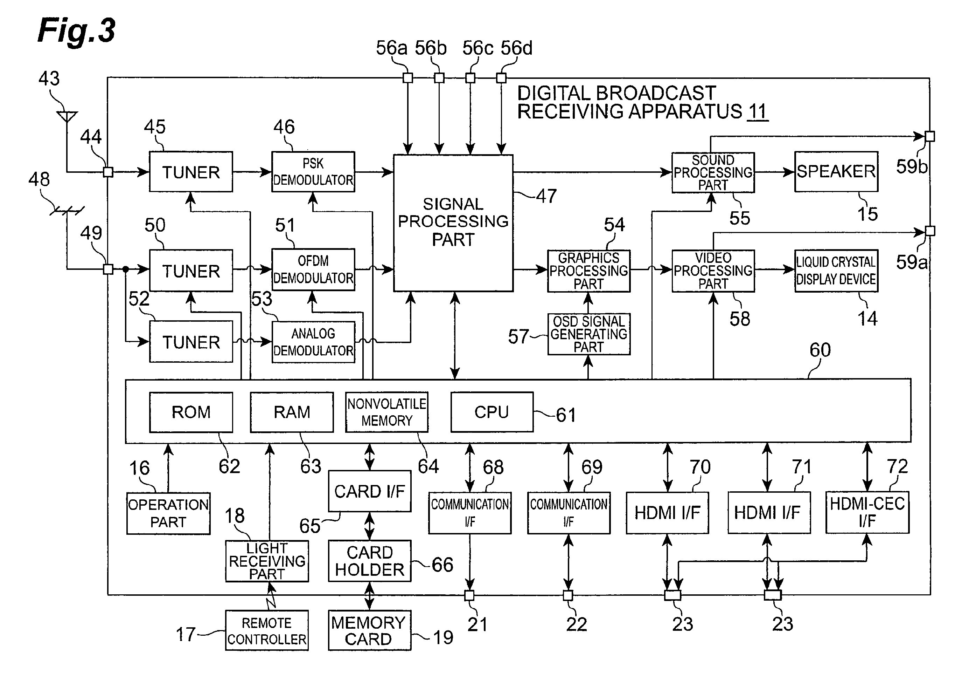

Next, a configuration of the inside of the digital broadcast receiving apparatus 11 will be described with reference to FIG. 3. FIG. 3 is a block diagram showing a main configuration of the inside of the digital broadcast receiving apparatus 11.

The digital broadcast receiving apparatus 11 includes input terminals 44, 49, tuners 45, 50, 52, and a PSK (Phase Shift Keying) demodulator 46. The digital broadcast receiving apparatus 11 also includes a signal processing part 47, an OFDM (Orthogonal Frequency Division Multiplexing) demodulator 51, an analog demodulator 53, a graphics processing part 54, a sound processing part 55, an OSD signal generating part 57 and a video processing part 58.

A satellite digital broadcast signal received by a BS/CS digital broadcast receiving antenna 43 is inputted into the input terminal 44. The satellite digital broadcast signal is supplied to the tuner 45 from the input terminal 44. The tuner 45 is a tuner for satellite digital broadcast, and selects a broadcast signal of a desired channel from satellite digital broadcast signals supplied thereto.

The broadcast signal which is selected by the tuner 45 is supplied to the PSK demodulator 46. The PSK demodulator 46 performs a demodulation processing of the digital video signal and sound signal, and output them to the signal processing part 47.

A terrestrial digital broadcast signal received by a terrestrial broadcast receiving antenna 48 is inputted into the input terminal 49. The terrestrial digital broadcast signal is supplied to the tuner 50 from the input terminal 49. The tuner 50 is a tuner for terrestrial digital broadcast, and selects a broadcast signal of a desired channel from the terrestrial digital broadcast signals supplied thereto.

The broadcast signal selected by the tuner 50 is supplied to the OFDM demodulator 51. The OFDM demodulator 51 performs a demodulation processing of the digital video signal and sound signal, and outputs them to the signal processing part 47.

A terrestrial analogue broadcast signal received by the terrestrial broadcast receiving antenna 48 is also inputted into the input terminal 49. The terrestrial analogue broadcast signal is supplied to the tuner 52 from the input terminal 49. The tuner 52 is a tuner for terrestrial analogue broadcast, and selects a broadcast signal of a desired channel from the terrestrial analogue broadcast signals supplied thereto.

The broadcast signal selected by the tuner 52 is supplied to the analogue demodulator 53. The analogue demodulator 53 performs a demodulation processing of analogue video signal and sound signal, and outputs them to the signal processing part 47.

The signal processing part 47 selectively applies a predetermined digital signal processing to the digital video signal and sound signal supplied respectively from the PSK demodulator 46 and the OFDM demodulator 51, and outputs the signals to the graphics processing part 54 and the sound processing part 55.

A plurality (four in the case of the illustration) of input terminals 56a, 56b, 56c, 56d are connected to the signal processing part 47. These input terminals 56a to 56d are capable of inputting analogue video signals and sound signals therein from the DVD recorder 29 and the like as the external apparatus.

This signal processing part 47 selectively digitizes the analogue video signals and sound signals supplied respectively from the analogue demodulator 53 and the respective input terminals 56a to 56d. The signal processing part 47 applies a predetermined digital signal processing to the digitized video signals and sound signals, and thereafter, outputs them to the graphics processing part 54 and the sound processing part 55.

The graphics processing part 54 superimposes an OSD (On Screen Display) signal generated in the OSD signal generating part 57 on the digital video signal supplied from the signal processing part 47, and outputs the signals. The graphics processing part 54 can selectively output the output video signal of the signal processing part 47 and the OSD signal outputted by the OSD signal generating part 57, and also can output both the output video signal and OSD signal in combination so that both the outputs constitute halves of the screen respectively.

The digital video signal outputted from the graphics processing part 54 is supplied to the video processing part 58. The video processing part 58 converts the inputted digital video signal into an analogue video signal in a format displayable in the liquid crystal display device 14, and thereafter, outputs the analog video signal to the liquid crystal display device 14. The video processing part 58 also leads the analogue video signal to the outside through an output terminal 59a.

The sound processing part 55 converts the inputted digital sound signal into an analogue sound signal in a format reproducible in the speaker 15, and thereafter, outputs the analogue sound signal to the speaker 15. The sound processing part 55 also leads the analogue sound signal to the outside through an output terminal 59b.

The digital broadcast receiving apparatus 11 includes a control part 60, a card holder 66 and various kinds of interfaces (card I/F 65, communication I/F 68, communication I/F 69, first HDMI I/F 70, second HDMI I/F 71, HDMI-CEC I/F 72).

The control part 60 includes a CPU (Central Processing Unit) 61, a ROM (Read Only Memory) 62, a RAM (Random Access Memory) 63 and a nonvolatile memory 64. The control part 60 comprehensively controls the operations of the digital broadcast receiving apparatus 11 including an operation of receiving the broadcast signal. The control part 60 receives operation information from the operation part 16, or receives operation information sent out from the remote controller 17 through the receiving part 18, and controls each part so that an operation content thereof is reflected.

While the CPU 61 operates as various kinds of units (apparatus switching unit, activation control unit, standby control unit and the like) in accordance with a program stored in the ROM 62, the CPU 61 performs input and output of the signal with other components to perform operation control of the entire digital broadcast receiving apparatus 11.

The ROM 62 mainly stores a control program executed by the CPU 61. The RAM 63 provides an operation area to the CPU 61. The nonvolatile memory 64 stores various kinds of setting information, control information and the like.

The control part 60 is connected to the card holder 66, to which the memory card 19 is loadable, through the card I/F (Interface) 65. Thereby, the control part 60 can perform information transmission with the memory card 19 loaded to the card holder 66 through the card I/F 65.

The control part 60 is also connected to the first LAN terminal 21 through the communication I/F 68. Thereby, the control part 60 can perform information transmission with the LAN compatible HDD 25 connected to the first LAN terminal 21, through the communication I/F 68. In this case, the control part 60 has a DHCP (Dynamic Host Configuration Protocol) server function, and assigns an IP (Internet Protocol) address to the LAN compatible HDD 25 connected to the first LAN terminal 21 to perform control.

The control part 60 is connected to the second LAN terminal 22 through the communication I/F 69. Thereby, the control part 60 can perform information transmission with each of the apparatuses connected to the second LAN terminal 22 such as the HDD 27, through the communication I/F 69.

The control part 60 is connected to the first HDMI terminal 23 through the first HDMI I/F 70 and the HDMI-CEC I/F 72, and connected to the second HDMI terminal 24 through the second HDMI I/F 71 and the HDMI-CEC I/F 72. Thereby, the control part 60 can perform information transmission with the STB 35 and the HD DVD player 36 which are connected to the first and second HDMI terminals 23, 24, through the first and second HDMI I/F 70, 71 and the HDMI-CEC I/F 72.

### (Description of Operation Content)

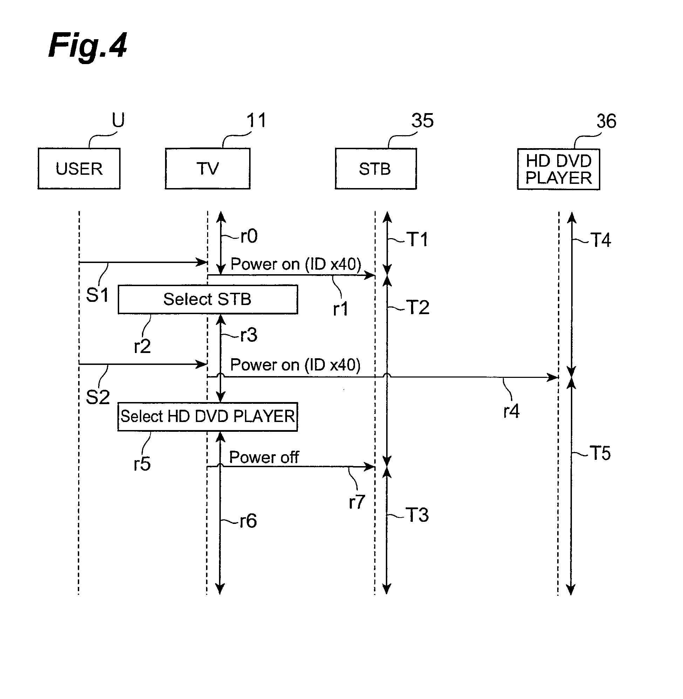

Next, there will be described an operation content of the power control system at a time that the digital broadcast receiving apparatus 11 having the above configuration performs power control. FIG. 4 is a sequence chart showing an operation sequence of each apparatus at a time that the digital broadcast receiving apparatus 11 controls turning on/off of the STB 35 and the HD DVD player 36.

When the digital broadcast receiving apparatus 11 performs power control, turning on/off of power sources of the external apparatuses (in description hereinafter, the STB 35 and the HD DVD player 36) connected to the digital broadcast receiving apparatus 11 is automatically performed in an interlocked manner with apparatus switching. Hereinafter, there will be described power control in a case that the digital broadcast receiving apparatus 11 is operated in correspondence with a command by an HDMI-CEC (CONDUMER ELECTRONICS CONTROL) standard.

### (Operation Example 1)

First, as shown in FIG. 4, in the digital broadcast receiving apparatus 11, a user U performs a predetermined operation (hereinafter referred to as "remote control operation") using a remote controller 17 to select either one of the first and second HDMI terminals 23, 24. The remote control operation here means that the user U selects either one of the STB 35 and the HD DVD player 36 for viewing.

When this remote control operation is performed, in the digital broadcast receiving apparatus 11, the CPU 61 operates as an apparatus switching unit and performs apparatus switching, switching any one of the connected external apparatuses to be for video display. Then, the video signal and the sound signal outputted from the external apparatus having been switched to be for video display are inputted into the digital broadcast receiving apparatus 11, and video is displayed on the liquid crystal display device 14. For example, if the user U selects the first HDMI terminal 23 by the remote control operation, the STB 35 is switched to be the external apparatus for video display, so that the video using the video signal outputted from the STB 35 is displayed in the liquid crystal display device 14.

As stated above, the apparatus switching means switching any one of the plurality of external apparatuses (in the embodiment, the STB 35 and the HD DVD player 36) connected to the digital broadcast receiving apparatus 11 to be for video display.

Here, back in FIG. 4, assume that the user U performs a selection operation S1 of selecting the first HDMI terminal 23.

In this case, in the digital broadcast receiving apparatus 11, if a video display r0 of a broadcast wave received by using any one of the tuners 45, 50, 52 is being performed, the STB 35 is not used for video display and the power source thereof is in an off-state. Accordingly, the digital broadcast receiving apparatus 11 performs the video display r0 of the broadcast wave in a period T1 until a command output r1 is performed, and then performs the output r1 of a command ("Power On") to activate the power source for the STB 35 (in this case, the CPU 60 transmits the "Power On" command and performs activation control).

By the command output r1 being performed, the power source of the STB 35 is turned on so that the STB 35 comes in a power-on state and in a viewing state. Thus, the digital broadcast receiving apparatus 11 performs a selection r2 of making the STB 35 be an input source of a video signal and performs a video display r3 by using the video signal inputted from the STB 35.

Next, assume that the user U performs a selection operation S2 of selecting the second HDMI terminal 24. In this case, since the digital broadcast receiving apparatus 11 is performing the video display r3 by using the video signal inputted from the STB 35, the HD DVD player 36 is not used for video display and the power source thereof is in an off-state. Accordingly, the digital broadcast receiving apparatus 11 performs an output r4 of a command ("Power On") to activate the power source for the HD DVD player 36 (also in this case, the CPU 60 transmits the "Power On" command and performs activation control).

By the command output r4 being performed, the power source of the HD DVD player 36 is turned on so that the HD DVD player 36 comes in an on-state and in a viewing state. Thus, the digital broadcast receiving apparatus 11 performs a selection r5 of making the HD DVD player 36 be the input source of the video signal and performs a video display r6 by using the video signal inputted from the HD DVD player 36.

However, by the external apparatus for video display being switched from the STB 35 to the HD DVD player 36, the STB 35 is not used for video display. Thus, the digital broadcast receiving apparatus 11 performs an output r7 of a command ("Power Off") to make the power source be turned off and in a standby state for the STB 35 (in this case the CPU 60 transmits the "Power Off" command and performs standby control).

By turning on/off of the power source being controlled as above, the STB 35 is in the power-off state during the period T1 until the command output r1 is performed, in the power-on state during a period T2 from the command output r1 to the command output r7, and in the power-off state after the command output r7. The HD DVD player 36 is in the power-off state during a period T4 until the command output r4 is performed, and in the power-on state after the command output r4.

By the digital broadcast receiving apparatus 11 performing power control as above, turning on/off of the power sources of the STB 35 and the HD DVD player 36 is appropriately controlled in an interlocked manner with the apparatus switching, so that the power source of the external apparatus which is not used for video display is automatically turned off. Therefore, power consumption of each apparatus constituting the power control system 10 is reduced.

Further, since the user U is not required to perform turning on/off of the power sources of the STB 35 and the HD DVD player 36 by hand, the convenience is enhanced. As stated above, by the digital broadcast receiving apparatus 11 performing power control, the digital broadcast receiving apparatus 11, the STB 35 and the HD DVD player 36 act as if being one system with respect to turning on/off of the power sources.

### (Operation Example 2)

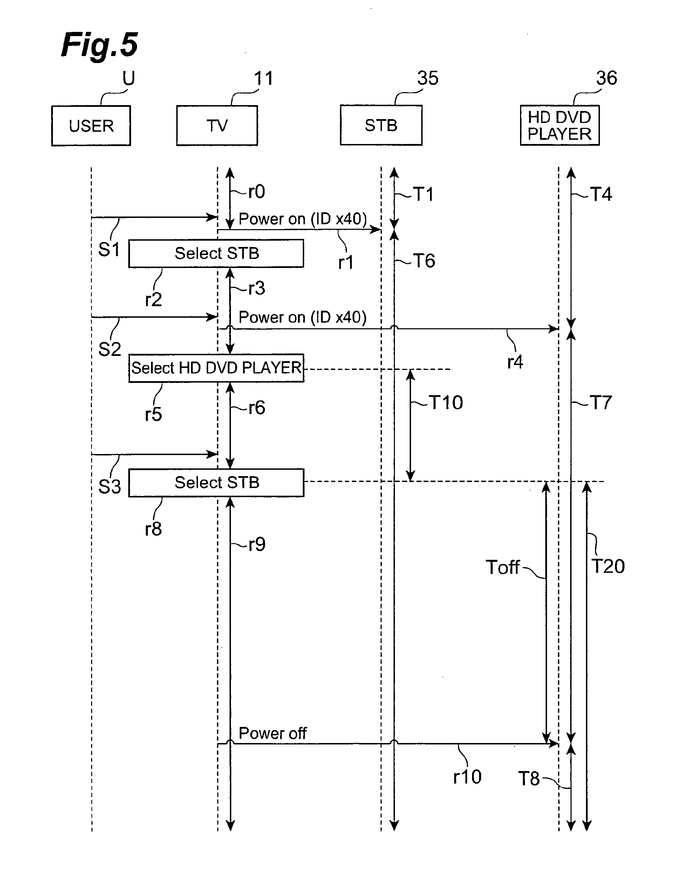

Next, an operation example 2 of power control by the digital broadcast receiving apparatus 11 will be described with reference to FIG. 5. In the power control by the operation example 2, times until the power sources of the STB 35 and the HD DVD 36 are turned off are made different.

An operation of the operation example 2 until the digital broadcast receiving apparatus 11 performs the selection r5 of the video signal is similar, compared with the operation example 1.

In the operation example 1, when the selection r5 is performed and the external apparatus for video display is switched from the STB 35 to the HD DVD player 36, the STB 35 is not used for video display. Accordingly, the digital broadcast receiving apparatus 11 performs the command output r7 and makes the STB 35 be in the power-off state (standby state).

However, if the apparatus switching often happens by the user U performing the remote control operation frequently, turning on/off of the power sources of the STB 35 and the HD DVD player 36 occurs frequently. Therefore, in the operation example 2, there is set a standby time (Toff) until the external apparatus is made to be in the power-off state by standby control. The standby time (Toff) is set by the CPU 61 as a standby time setting unit, being set by the CPU 61 without the operation by the user U or being set in correspondence with the remote control operation by the user U.

With regard to the standby time, in the operation example 2, it is prescribed that T10 < Toff < T20. Here, "T10" indicates an elapsed time from a time that the external apparatus for video display is switched to the HD DVD player 36 (elapsed time from a time that the STB 35 comes not to be used for video display). "T20" indicates an elapsed time from a time that the external apparatus for video display is switched to the STB 35 (elapsed time from a time that the HD DVD player 36 comes not to be used for video display).

In the operation example 2, since the user U performs a selection operation S3 of selecting the first HDMI terminal 23 before the elapsed time T10 exceeds the standby time Toff, the power source of the STB 35 is not turned off here by the command output r7 being performed. Accordingly, the STB 35 is in the power-on state during a period T6 from a time that the command output r1 occurs. In the digital broadcast receiving apparatus 11, in response to the selection operation S3, a selection r8 of making the STB 35 be an input source of the video signal is performed, and a video display r9 is performed by using the video signal inputted from the STB 35.

Thereafter, the time passes without the user U performing the selection operation. Since the user U has performed the selection operation S3 of selecting the first HDMI terminal 23, the HD DVD player 36 is already not in use for video display. Therefore, when the elapsed time T20 coincides with the standby time Toff, the digital broadcast receiving apparatus 11 performs an output r10 of a command ("Power Off") to make the HD DVD player 36 be in the standby state and makes the HD DVD player 36 be in the power-off state.

In this case, the HD DVD player 36 has been in the power-on state during the period T7 from the time the command output r4 occurs to the command output r10, and comes to be in the power-off state in the period T8 after the command output r10.

Even as above, similarly to in the operation example 1, turning on/off of the power sources of the STB 35 and the HD DVD player 36 is controlled appropriately in the interlocked manner with the apparatus switching, so that the power source of the external apparatus which the user U is not using for viewing is turned off automatically, and the power consumption is reduced. Further, since the user U is not required to perform turning on/off of the power sources of the STB 35 and the HD DVD player 36 by hand, the convenience is enhanced. Moreover, it is also possible to make turning on/off of the power sources of the STB 35 and the HD DVD player 36 not occur frequently.

### (Operation Example 3)

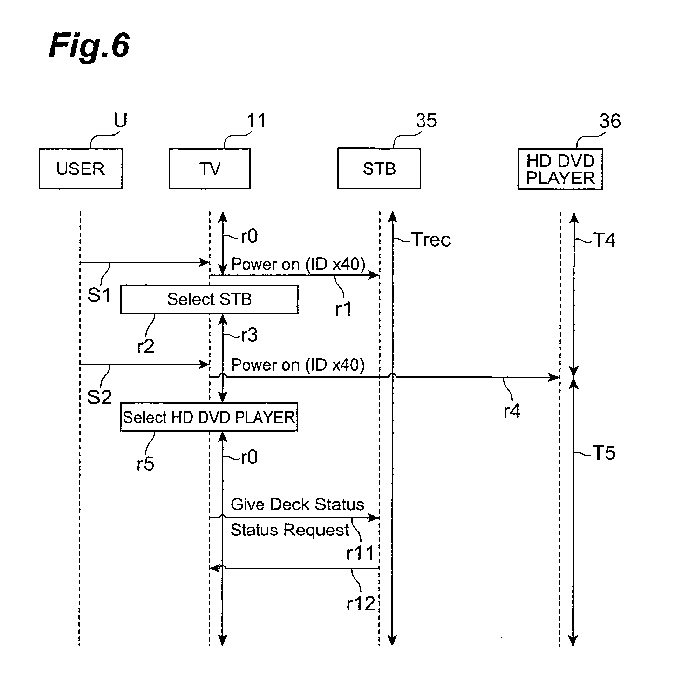

Next, an operation example 3 of power control by the digital broadcast receiving apparatus 11 will be described with reference to FIG. 6. In a case of power control by the operation example 3, the digital broadcast receiving apparatus 11 checks an operation status of each of the STB 35 and the HD DVD player 36 before turning off the power sources thereof so as to turn on/off the power source appropriately in correspondence with the operation status.

An operation of the operation example 3 until the digital broadcast receiving apparatus 11 performs the selection r5 of the video signal is similar, compared with the operation example 1.

In the operation example 1, when the selection r5 is performed and the external apparatus for video display is switched from the STB 35 to the HD DVD player 36, the STB 35 is not used for video display. Accordingly, the digital broadcast receiving apparatus 11 performs the command output r7 and makes the STB 35 be in the power-off state (standby state).

However, assume that the STB 35 has been in the power-on state before the command output r1 and further that reserved recording by using the video signal of the STB 35 is being performed at the time that the external apparatus for video display is switched from the STB 35 to the HD DVD player 36. In other words, assume that the STB 35 is a viewing external apparatus since the selection r5 is performed during a reserved recording period Trec of the STB 35. If the STB 35 in such a status is made to be in the power-off state, the reserved recording is influenced, and it is not appropriate to make the STB 35 be in the power-off state.

Thus, the digital broadcast receiving apparatus 11 performs an output r11 of a status checking command ("Give Deck Status") before performing the command output r7. When the STB 35 receives the status checking command, the STB 35 performs an output r12 of a status notification command ("Status Request"). The status notification command indicates that the reserved recording is being performed.

Since it is confirmed that the STB 35 is performing the reserved recording by the status notification command, the digital broadcast receiving apparatus 11 controls not to output the command ("Power Off") to make the STB 35 be in the standby state (not to perform the command output r7).

Thereby, the power source of the STB 35, which has been in the viewing state before the "Power On" command is outputted, is not made to be in the off-state by the power control. Accordingly, performing of power off which is not desired (not intended) by the user U for the STB 35 and the HD DVD player 36 is evaded.

### (Modification Example)

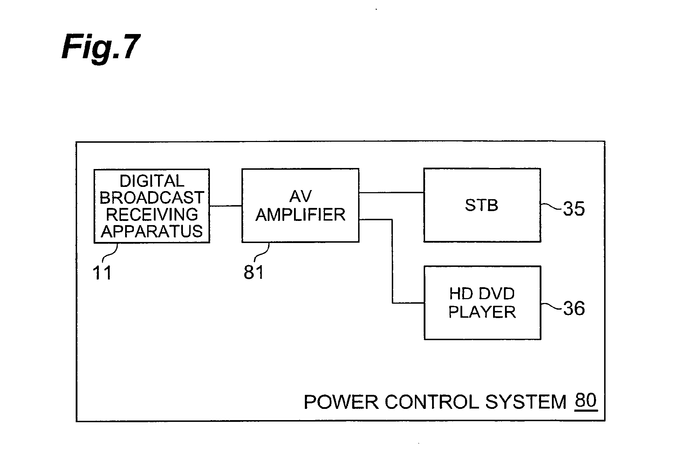

The embodiment can be applied also to a power control system 80 shown in FIG. 7. The power control system 80 includes an AV amplifier 81, and a digital broadcast receiving apparatus 11 is connected to an STB 35 and an HD DVD player 36 through the AV amplifier 81. In this case, the digital broadcast receiving apparatus 11 can grasp the fact that an external apparatus for video display is switched via the AV amplifier 81. Accordingly, the digital broadcast receiving apparatus 11 can perform power control via the AV amplifier 81 similarly to the above to control turning on/off of the power sources of the STB 35 and the HD DVD player 36.

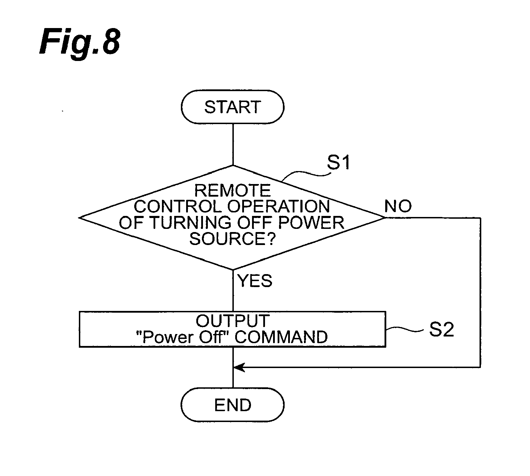

The digital broadcast receiving apparatus 11 may also make a power source of the connected external apparatus be in an off-state when a power source of the digital broadcast receiving apparatus 11 is made to be in an off-state. In this case, for example, the CPU 61 may perform an operation in accordance with a flowchart shown in FIG. 8.

In other words, in a block 1, the CPU 61 judges whether or not the power source of the digital broadcast receiving apparatus 11 is turned off (for example, as shown in FIG. 8, whether or not a remote control operation of turning off the power source of the digital broadcast receiving apparatus 11 is performed). When the CPU judges that the remote control operation of turning off the power source is performed, the CPU 61 makes a processing proceed to a block 2 to perform an operation as a standby control unit, and outputs a "Power Off" command to every connected external apparatus, and terminates the processing. Thereby, the power source of every connected external apparatus can be turned off automatically in an interlocked manner with power-off of the digital broadcast receiving apparatus 11, and the convenience is enhanced.

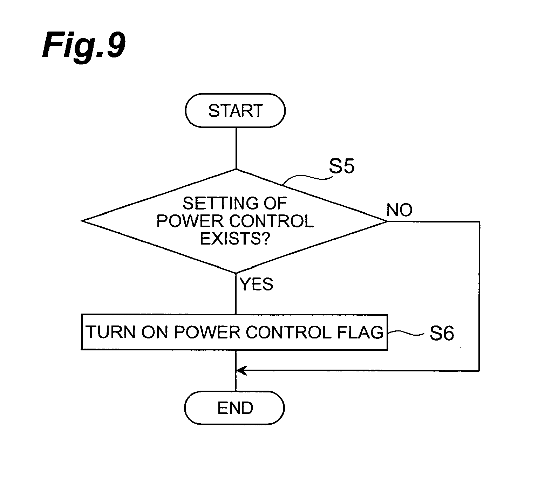

Further, the digital broadcast receiving apparatus 11 may be able to switch whether or not to perform the above-described power control. In this case, for example, the CPU 61 may perform the operation in accordance with a flowchart shown in FIG. 9.

In other words, the CPU 61 judges whether or not setting of the power control is performed in a block 5. When the CPU 61 judges that the setting of the power control is performed, the CPU 61 makes the processing proceed to a block 6 to turn on a power control flag, and terminates the processing. The CPU 61 may perform the operation as a control switching unit and may switch whether or not to perform power control with reference to the power control flag before performing the above-described power control.

In this case, the CPU 61 may perform the above-described power control only when the power source flag is turned on. The setting of the power control may be performed by the CPU 61 performing the operation as a setting unit in correspondence with a user's remote control operation. The setting may be the setting of whether or not to perform the power control, and the setting may be performed per every connected external apparatus. Thereby, the user can freely set whether or not to perform the power control.

In the above embodiment, the digital broadcast receiving apparatus 11 to which the power control apparatus is applied is exemplified, but the power control apparatus can be applied to other display apparatuses such as a monitor and a projector.

In the above-embodiment, the case that the power control is performed by using the command by the HDMI-CEC standard is exemplified, but the embodiment can be realized by using a command in accordance with another standard (for example, AV-Link).

In the above-described embodiment, the power control via the first and second HDMI terminals 23, 24 is exemplified, but power control via the first and second LAN terminals 21, 22 can be performed. Such power control can be realized by applying WOL (Wake On LAN), for example. The WOL means a function of activating a computer connected to LAN from another computer via a network. By applying the WOL, it becomes possible to activate an external apparatus such as the DVD recorder 29 connected to the LAN from the digital broadcast receiving apparatus 11, via the LAN.

The above explanation is for explaining the embodiments of the invention, and not to limit the apparatus and the method of the invention, and various modification examples thereof can be implemented easily. Also, any apparatus or method constructed by appropriately combining the components, functions, characteristics or method blocks in the respective embodiments are included in the invention.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A power control apparatus applied to a video display apparatus (11) displaying video, the power control apparatus comprising:
an apparatus switching unit (61) switching any one of a plurality of external apparatuses (35, 36) connected to the video display apparatus (11) to be for video display; and
an activation control unit (61) performing activation control of activating a power source of the external apparatus (35) to make the external apparatus (35) be in a viewing state when the external apparatus (35) switched by said apparatus switching unit (61) is in a standby state.

2. The power control apparatus according to claim 1, further comprising a standby control unit (61) performing standby control of making the external apparatus (35) having been made to be in the viewing state be in a standby state, when the external apparatus (36) different from the external apparatus (35) made to be in the viewing state by said activation control unit is switched by said apparatus switching unit.

3. The power control apparatus according to claim 2, further comprising a standby time setting unit (61) setting a standby time until said standby control unit makes the external apparatus be in the standby state.

4. The power control apparatus according to claim 2 or 3, wherein said standby control unit makes all of the plurality of the external apparatuses (35, 36) be in the standby states, when a power source of the video display device (11) is made to be in a standby state.

5. The power control apparatus according to any one of claim 2 to 4, wherein said standby control unit does not make the viewing external apparatus (35) whose power source has been already turned on before being made to be in the viewing state by said activation control unit among the plurality of external apparatuses be in the standby state.

6. The power control apparatus according to any one of claim 2 to 4, further comprising a control switching unit (61) switching whether or not to perform the activation control by said activation control unit and the standby control by said standby control unit.

7. The power control apparatus according to claim 6, wherein said control switching unit is configured to switch whether or not to perform the activation control and the standby control for each external apparatus.

8. The power control apparatus according to any one of claim 2 to 7, wherein said activation control unit and said standby control unit are configured to operate in correspondence with an HDMI-CEC standard.

9. A power control system (10) including a video display apparatus displaying video and a plurality of external apparatuses connected to the video display apparatus and controlling power sources of the plurality of external apparatuses by the video display apparatus,
wherein the video display apparatus comprises:
an apparatus switching unit switching any one of the plurality of external apparatuses to be for video display; and
an activation control unit performing activation control of activating the power source of the external apparatus to make the external apparatus be in a viewing state when the external apparatus switched by said apparatus switching unit is in a standby state.

10. A power control method applied to a video display apparatus displaying video, the power control method comprising:
switching any one of a plurality of external apparatuses connected to the video display apparatus to be for video display; and
performing activation control of activating a power source of the external apparatus to make the external apparatus be in a viewing state when the switched external apparatus is in a standby state.
